# DEMANDE DE BREVET EUROPEEN

(11) **EP 4 552 917 A1**
(43) Date de publication de la demande: **14.05.2025**
(21) Numéro de dépôt: 24211386.8
(22) Date de dépôt: 07.11.2024
(51) Int. Cl.: B60N 2/02, B60N 2/06, B60N 2/30, B60N 2/50, B60N 2/52

(54) **SIEGE POUR VEHICULE AUTOMOBILE A ASSISE RELEVABLE**

(30) Priorité: 07.11.2023 FR 2312062
(71) Demandeur: Renault s.a.s, 92100 Boulogne Billancourt (FR)
(72) Inventeur: OUALI-GAFFRIC, Bastien, 78280 GUYANCOURT (FR); ROY, Jean-Baptiste, 78280 GUYANCOURT (FR); SOUVILLE, Philippe, 78280 GUYANCOURT (FR)

(57) **Abrégé**

L'invention concerne un siège (10) pour véhicule automobile, comportant :
- une structure porteuse (100) équipée de moyens de fixation à un plancher du véhicule automobile,
- une armature d'assise (200) montée de façon mobile sur la structure porteuse par un système de bielles, sur une course donnée, et
- une armature de dossier (300) directement montée de façon mobile sur la structure porteuse.

Selon l'invention, le système de bielles est agencé de telle manière que lorsque l'armature d'assise avance par rapport à la structure porteuse, sur au moins une majeure partie de sa course, elle s'abaisse par rapport à la structure porteuse.

## Description

### DOMAINE TECHNIQUE DE L'INVENTION

La présente invention concerne de manière générale l'habitabilité des véhicules automobiles.

Elle concerne plus particulièrement un siège pour véhicule automobile, comportant :
- une structure porteuse équipée de moyens de fixation à un plancher du véhicule automobile,
- une armature d'assise recouverte d'une garniture et montée de façon mobile sur la structure porteuse par un système de bielles, sur une course donnée, et
- une armature de dossier recouverte d'une garniture et directement montée de façon mobile sur la structure porteuse.

Elle concerne également un véhicule automobile comportant un plancher et au moins un siège tel que précité, dont la structure porteuse est fixée au plancher.

### ETAT DE LA TECHNIQUE

Dans le domaine de l'automobile, les sièges avant sont généralement montés sur le plancher de manière à pouvoir être avancés ou reculés, à la convenance de l'usager (compte tenu principalement de sa morphologie).

Un tel siège comporte une assise, un dossier et des rails mobiles qui sont montés coulissant dans des rails fixés au plancher.

Une architecture conventionnelle consiste à monter le dossier sur l'assise, et l'assise sur les rails mobiles.

Une seconde architecture, quelque peu tombée en désuétude, consiste à monter l'assise et le dossier sur une structure porteuse comprenant les rails mobiles. Une telle architecture permet de découpler les mouvements du dossier et de l'assise. C'est pourquoi on parle d'« architecture découplée ».

Il est souhaitable de permettre à l'assise de monter par rapport au dossier. Pour cela, avec l'architecture découplée, l'assise n'est pas directement fixée sur la structure porteuse, mais elle est montée mobile sur celle-ci par un système de cames. Il est plus précisément prévu, de chaque côté de l'assise, deux cames qui forment un parallélogramme.

Les deux parallélogrammes sont agencés de manière à ce que l'assise puisse suivre un mouvement, dit de translation rotative. Ainsi, lorsque l'occupant baisse l'assise, cette dernière recule automatiquement (et vis-versa).

Un tel siège est prévu pour accueillir des occupants aux morphologies très variées, et notamment des personnes de tailles pouvant aller par exemple de 1,50 m à 2,10 m.

Il s'avère alors que l'architecture découplée ne permet pas de proposer un siège qui soit agréable quelle que soit la taille de l'occupant. En effet, un occupant de grande taille voudra généralement baisser l'assise pour avoir la tête à distance du toit du véhicule. En procédant ainsi, son assise sera reculée par rapport au dossier et sera donc plus courte que pour un occupant de petite taille.

On comprend donc pourquoi cette architecture découplée est tombée en désuétude.

### PRESENTATION DE L'INVENTION

La présente invention propose pourtant d'utiliser cette architecture découplée, mais de revoir la cinématique de rehausse de l'assise afin que le siège reste agréable quelle que soit la taille de l'occupant.

Plus particulièrement, on propose selon l'invention un siège tel que défini dans l'introduction, dans lequel le système de bielles est agencé de telle manière que lorsque l'armature d'assise avance par rapport à la structure porteuse, sur au moins une majeure partie de sa course, elle s'abaisse vers la structure porteuse.

Ainsi, grâce à l'invention, pour abaisser l'assise, il faut la faire avancer. De cette manière, plus l'occupant sera grand, plus il disposera d'une surface d'assise importante, au bénéfice de son confort.

En outre, plus il abaissera son assise, plus il augmentera la distance entre cette dernière et l'appui-tête, de sorte qu'il ne sera plus nécessaire de régler la position de cet appui-tête. Par ailleurs, il sera possible de concevoir les bielles de manière à ce que l'inclinaison de l'assise varie en fonction de la position de l'assise par rapport à la structure porteuse. En effet, une personne de petite taille a besoin d'une assise non seulement haute et courte, mais également peu pentue. C'est tout l'inverse avec une personne de grande taille.

Pour cela, le siège sera de préférence prévu de façon à ce que l'avant de l'assise descende plus vite que l'arrière (et remonte donc plus vite que l'arrière). Le débattement de l'avant de l'assise sera alors plus grand que le débattement de l'arrière, l'objectif étant qu'en position basse, l'assise soit plus horizontale qu'en position haute où elle sera davantage inclinée vers l'arrière.

L'architecture proposée selon l'invention permet donc de répondre à ces contraintes simplement, sans adjonction de mécanismes supplémentaires (nez de coussin, réglage de pente d'assise, appui-tête ajustable en hauteur).

Cette architecture découplée présente également d'autres avantages.

Typiquement, le dossier porte généralement en partie supérieure un renvoi de ceinture de sécurité. Ce renvoi est le plus contraignant lorsqu'il s'agit de dimensionner le dossier. Avec cette architecture découplée, les efforts ne passent pas par l'assise, si bien qu'il n'est pas nécessaire de la surdimensionner, au bénéfice du poids total du siège.

Par ailleurs, lorsque l'assise est en position haute, elle libère un espace entre le plancher et le dessous de l'assise, habituellement désigné sous l'appellation « cave à pieds ». Cet espace permet en effet aux passagers arrière de placer leurs pieds sous l'assise pour bénéficier de davantage de place pour les jambes.

Sur les véhicules actuels, on remarque que cet espace se retreint pour deux raisons. Dans les véhicules électriques ou hybrides, les batteries d'accumulateurs sont généralement placées dans le plancher, lequel est donc plus épais qu'auparavant. Par ailleurs, pour améliorer le coefficient aérodynamique de pénétration dans l'air du véhicule, on cherche à diminuer la hauteur de l'habitacle et donc à rapprocher l'assise du plancher.

Grâce à l'invention, lorsque l'occupant abaisse son assise, il la fait avancer ce qui libère un peu d'espace au passager arrière pour ses pieds et ses jambes.

En outre, l'architecture découplée permet, lors de la conception du siège, de positionner à l'avant du siège des composants de l'assise qui sont généralement placés à l'arrière (notamment le système de manoeuvre ou de motorisation de l'assise), ce qui libère encore davantage d'espace pour les pieds des passagers arrière.

D'autres caractéristiques avantageuses et non limitatives du siège conforme à l'invention, prises individuellement ou selon toutes les combinaisons techniquement possibles, sont les suivantes :
- le système de bielles comporte quatre bielles, réparties par paires de chaque côté de l'armature d'assise, dont deux bielles avant et deux bielles arrière, chaque bielle avant et arrière étant articulée, d'un côté, sur l'armature d'assise, et, de l'autre, sur la structure porteuse ;
- dans le système de bielles, seules les bielles avant sont fixées l'une à l'autre par au moins une traverse ;
- chacune des bielles avant et arrière est articulée sur l'armature d'assise et sur la structure porteuse autour de deux axes d'articulation distincts ;
- la distance entre les deux axes d'articulation de chaque bielle avant est différente de la distance entre les deux axes d'articulation de chaque bielle arrière ;
- le plan passant par les deux axes d'articulation de chaque bielle avant est incliné par rapport au plan passant par les deux axes d'articulation de chaque bielle arrière ;
- il est prévu des moyens de manoeuvre, permettant à un occupant du siège de déplacer l'armature d'assise par rapport à la structure porteuse, lesdits moyens de manoeuvre étant localisés dans une moitié avant de l'assise ;
- les moyens de manoeuvre sont adaptés à actionner l'une des bielles avant ;
- les moyens de manoeuvre sont couplés à une roue dentée engrenant des crans répartis en arc de cercle sur ladite bielle avant ;
- il est prévu des moyens de compensation du poids adaptés à faciliter la remontée de l'armature d'assise par rapport à la structure porteuse ;
- les moyens de compensation du poids comportent au moins un vérin dont une partie est couplée à la structure porteuse et dont une autre partie est couplée au système de bielles ;
- les moyens de compensation du poids comportent au moins un ressort dont une extrémité est couplée à la structure porteuse et dont une autre extrémité est couplée au système de bielles ;
- ladite autre partie du vérin ou extrémité du ressort est couplée à l'une des bielles arrière ;
- la structure porteuse comporte deux glissières qui comprennent chacune un rail fixe équipé des moyens de fixation au plancher du véhicule automobile, et un rail mobile qui est monté coulissant dans le rail fixe et auquel est couplé le système de bielles.

L'invention propose également un véhicule automobile comportant un plancher et au moins un siège tel que précité, dont une partie au moins de la structure porteuse est fixée au plancher.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective d'une partie d'un siège conforme à l'invention, représentée avec son armature d'assise en position haute ;
[Fig. 2] est une vue homologue de celle de la figure 1, sur laquelle l'armature d'assise est représentée en position basse ;
[Fig. 3] est une vue schématique en perspective d'une partie du système de montage de l'armature assise sur la structure porteuse du siège de la figure 1, sur laquelle l'armature d'assise est représentée en position haute ;
[Fig. 4] est une vue homologue de celle de la figure 3, sur laquelle l'armature d'assise est représentée en position basse ;
[Fig. 5] est une vue schématique de côté d'une variante de réalisation du système de montage de l'armature assise sur la structure porteuse, sur laquelle l'armature d'assise est représentée en position basse ;
[Fig. 6] est une vue homologue de celle de la figure 5, sur laquelle l'armature d'assise est représentée en position haute.

En préliminaire on notera que les éléments identiques ou similaires des différentes variantes de réalisation de l'invention représentées sur les différentes figures seront, dans la mesure du possible, référencés par les mêmes signes de référence et ne seront pas décrits à chaque fois.

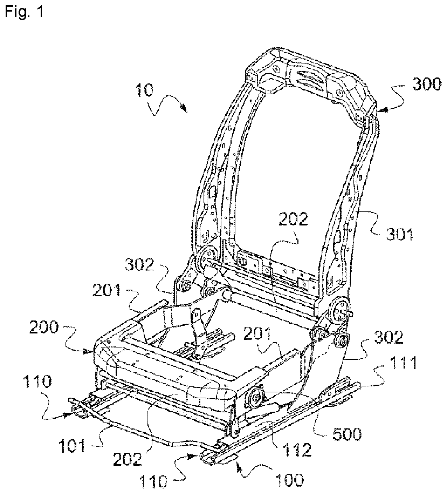

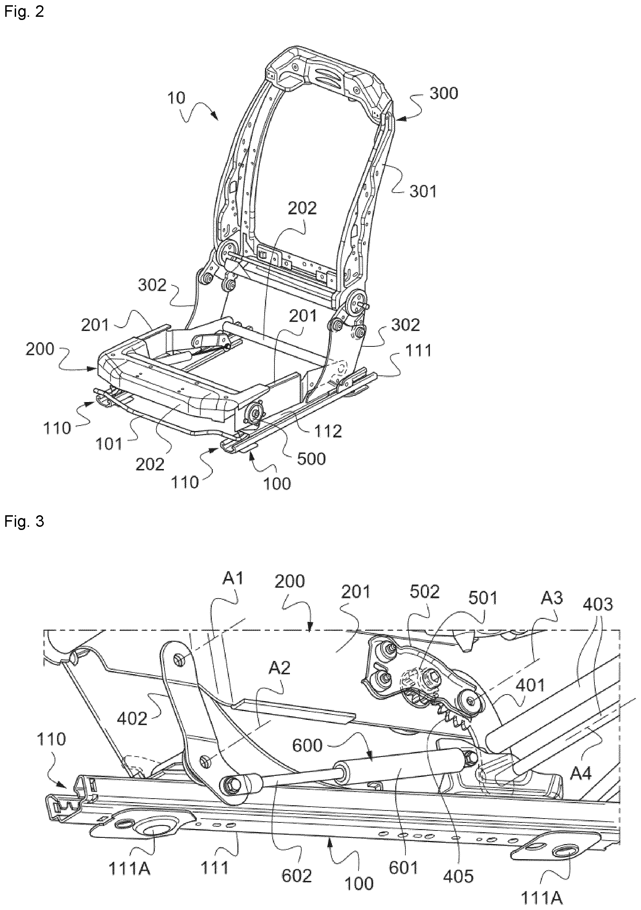

Sur les figures 1 et 2, on a représenté une partie d'un siège 10 prévu pour être installé dans l'habitacle d'un véhicule automobile (voiture, car, camion, bateau, avion...) et pour être fixé au plancher de ce véhicule automobile.

Dans la suite de la description, les termes « avant » et « arrière » seront utilisés par rapport au véhicule automobile, la partie avant d'un élément désignant la partie de cet élément qui est située du côté du capot du véhicule et la partie arrière désignant la partie de cet élément qui est située du côté opposé.

Les termes « inférieur » (ou « bas ») et « supérieur » (ou « haut ») seront utilisés de la même façon, la partie inférieure d'un élément désignant la partie de cet élément qui est située du côté du plancher du véhicule et la partie supérieure désignant la partie de cet élément qui est située du côté du toit du véhicule.

L'adjectif « longitudinal » s'appliquera à une direction ou un axe orienté de l'avant vers l'arrière du véhicule, parallèlement à la direction d'avance du véhicule lorsque le volant est en position neutre.

L'adjectif « transversal » s'appliquera à une direction ou un axe orienté horizontalement et orthogonalement aux axes longitudinaux.

Le terme « fixé » sera employé pour désigner un blocage rigide (sans mobilité) entre deux éléments.

Le terme « couplé » sera employé pour désigner une solidarisation entre deux éléments avec un nombre quelconque de degré(s) de liberté, zéro compris.

L'expression « monté mobile » sera employée pour désigner une solidarisation entre deux éléments avec un nombre de degré(s) de liberté au moins égal à un.

Le siège 10 comporte classiquement une assise et un dossier, comprenant chacun une armature et une garniture rapportée sur l'armature. Sur les figures, seules les armatures d'assise 200 et de dossier 300 sont représentées. Elles sont ici métalliques.

Il comporte également une structure porteuse 100 sur laquelle sont directement montées les armatures d'assise 200 et de dossier 300. Par « directement », on entend que l'armature de dossier 300 n'est pas montée sur l'armature d'assise, mais est bien indépendante de celle-ci. Ainsi, un mouvement de l'armature d'assise 200 n'entraine pas un mouvement de l'armature de dossier 300 (et vis-versa).

Le siège 10 est prévu pour être monté mobile en translation sur le plancher du véhicule automobile. Sa structure porteuse comporte à cet effet deux glissières 110 longitudinales. Chaque glissière 110 comporte, d'une part, un rail fixe 111 inférieur qui est équipé de moyens de fixation 111A au plancher du véhicule (voir figure 3), et, d'autre part, un rail mobile 112 supérieur monté coulissant dans le rail fixe 111 et auquel sont couplées les armatures d'assise 200 et de dossier 300.

Les moyens de fixation 111A de chaque rail fixe 111 se présentent ici sous la forme d'ouvertures de passage de vis de fixation du rail fixe 111 sur le plancher du véhicule.

Les deux glissières 110 sont situées en parallèle l'une de l'autre et offrent donc au siège 10 une mobilité de coulissement longitudinal, en translation.

Classiquement, il est prévu des moyens de blocage (non visibles sur les figures) du coulissement de ces rails pour bloquer le siège en position longitudinale sur le plancher, et un levier de déverrouillage 101 de ces moyens de blocage pour libérer au besoin ce coulissement.

A ce stade, on peut décrire en détail comment est montée l'armature d'assise 200 sur la structure porteuse 100.

Comme le montre la figure 1 ou 2, l'armature d'assise 200 présente une forme de cadre avec deux flancs latéraux 201 connectés ensemble à l'avant et à l'arrière par des traverses 202. En variante, elle pourrait être formée par un berceau en matière plastique.

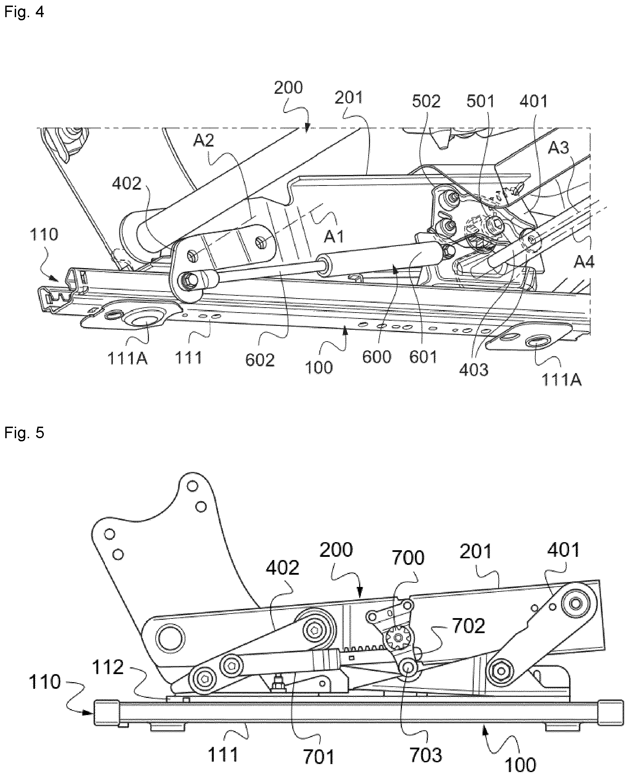

En pratique, comme le montrent les figures 3 et 4, cette armature d'assise 200 est montée sur la structure porteuse 100 par un système de bielles comportant ici quatre bielles, dont deux bielles arrière 402 identiques et deux bielles avant 401 sensiblement identiques.

Les bielles sont réparties des deux côtés de l'armature d'assise. Elles présentent des formes de plaques planes et allongées. Elles sont articulées chacune, d'un côté, sur le rail mobile 112 (et plus précisément sur un support fixé à ce rail, au-dessus de celui-ci), et de l'autre, à l'un des flancs 201 de l'armature d'assise 200. Par « articulé », on entend qu'une liaison de type pivot simple est prévue entre ces deux composants.

Ces liaisons pivots présentent des axes d'articulation qui sont transversaux. Plus précisément, l'une des deux bielles avant est articulée à ses extrémités autour de deux axes d'articulation A3, A4 qui sont communs avec ceux autour desquelles l'autre des bielles avant est articulée. De la même façon, l'une des deux bielles arrière est articulée à ses extrémités autour de deux axes d'articulation A1, A2 qui sont communs avec ceux autour desquelles l'autre des bielles arrière est articulée.

Dans la suite, on parlera d'entr'axe pour désigner la distance entre les axes d'articulation A1, A2 ou A3, A4 d'une bielle, et d'axe principal pour désigner un axe d'une bielle qui passe par les deux axes d'articulation A1, A2 ou A3, A4 de cette bielle.

On pourrait prévoir que les entr'axes des bielles soient tous égaux et que les axes principaux soient tous parallèles. Ainsi les bielles permettraient-elles de déplacer l'armature d'assise 200 selon un mouvement exact de translation rotative.

Mais en pratique, comme le montrent les figures 3 et 4, les entr'axes des bielles avant et arrière sont de longueurs différentes. En variante ou en complément, on pourrait prévoir que les orientations des axes principaux des bielles avant et arrière soient différents (c'est-à-dire que le plan passant par les axes d'articulation A1, A2 ne soit pas parallèle au plan passant par les axes d'articulation A3, A4). Ainsi les bielles permettent-elles de déplacer l'armature d'assise 200 selon un mouvement proche mais distinct d'un mouvement de translation rotative.

De manière avantageuse, l'entr'axe des bielles avant 401 est plus grand que celui des bielles arrière. De cette manière, une personne de grande taille qui abaissera l'assise verra cette dernière s'incliner vers l'arrière alors qu'une personne de petite taille qui montera l'assise verra cette dernière se redresser presqu'à l'horizontale.

En pratique, ces bielles sont agencées de façon à pouvoir basculer entre deux positions extrêmes, dont une position sensiblement verticale permettant à l'assise de se placer en position haute (figures 1 et 3), et une position sensiblement horizontale permettant à l'assise de se placer en position basse (figures 2 et 4).

En position haute, l'assise est située plus à l'arrière par rapport au dossier qu'en position basse. Autrement formulé, le plancher du véhicule étant à l'horizontal, si on considère la distance entre, d'une part, le plan vertical passant par le point le plus à l'arrière de l'armature d'assise 200, et, d'autre part, le plan vertical passant par le point le plus à l'avant de la structure porteuse 100, cette distance est plus grande lorsque l'assise est en position haute que lorsqu'elle est en position basse. De cette manière, une personne de grande taille qui abaisserait l'assise bénéficierait de davantage de surface pour s'y asseoir qu'une personne de petite taille qui monterait l'assise. En effet, en montant, une partie arrière de l'assise s'escamote sous le dossier.

Il est prévu des moyens de manoeuvre 500 permettant de commander la levée ou l'abaissement de l'assise.

De manière qu'ils soient facilement accessibles, ils sont placés sur la moitié avant de l'assise. Dès lors, ils sont préférentiellement conçus pour agir sur l'une des bielles avant 401. Cette bielle avant 401 étant menante, il est prévu de connecter les deux bielles avant 401 par au moins une traverse 403 (il en est ici prévu deux). Ces bielles étant ainsi fixées ensemble, l'actionnement de la bielle avant menante force l'autre bielle avant à suivre le mouvement de la première.

Les bielles arrière étant alors menées, il n'est pas nécessaire de les connecter ensemble par une traverse. Dès lors, un passager qui se trouverait à l'arrière du siège 10 bénéficierait de davantage d'espace pour glisser ses pieds sous l'assise du siège 10.

Les moyens de manoeuvre 500 sont de préférence manuels, mais ils pourraient en variante être motorisés.

Ils sont ici de type actif, mais ils pourraient en variante être de type inactif (auquel cas ils comporteraient un levier adapté à déverrouiller la mobilité de translation rotative de l'assise, l'occupant devant alors régler manuellement la position de cette assise avant de relâcher le levier pour verrouiller cette mobilité).

Comme le montre la figure 1, les moyens de manoeuvre 500 comportent alors ici un module de pompe à levier. Le levier (non représenté sur les figures) est adapté à pivoter autour d'un axe transversal (en variante, une molette pourrait être utilisée).

Ce levier est monté mobile sur l'un des flancs 201 de l'armature d'assise 200, à l'extérieur du cadre formé par celle-ci. Il permet d'actionner un axe qui traverse ce flanc 201 et débouche à l'intérieur du cadre. Comme le montrent les figures 3 et 4, cet axe porte ici une roue dentée 501 (ou « pignon ») dont les dents engrènent des crans prévus sur la bielle avant 401 menante. En pratique, l'une des extrémités de cette bielle avant 401 présente, sur une partie de son bord, des crans répartis le long d'un arc-de-cercle. Ainsi, lorsque le levier est actionné par pompage dans un sens ou dans l'autre, l'axe tourne et sa roue dentée 501 entraîne le pivotement de la bielle avant 401 menante, et donc la levée ou descente de l'armature d'assise 200.

On observe sur la figure 3 que, pour des questions de rigidité, l'axe est engagé à son extrémité dans une ouverture pratiquée dans une plaque de support 502 vissée, d'un côté, au flanc 201 par deux vis, et, de l'autre, par une vis formant l'un des axes d'articulations de la bielle avant 401.

A ce stade, on comprend que lorsqu'un occupant se trouve sur le siège et qu'il cherche à faire monter l'assise, le couple qu'il doit exercer sur le levier est trop grand pour qu'il y parvienne.

Afin de soulager l'occupant, il est prévu des moyens de compensation du poids du siège 10, voire aussi du poids de l'occupant lui-même.

Ces moyens de compensation pourraient se présenter sous des formes variées. Ils sont de préférence agencés de façon à ne pas se placer au travers de la cave à pieds.

Ici, ils longent les deux flancs 201 de l'armature d'assise 200. Ainsi, il est ici prévu deux systèmes de ressorts 600 comportant chacun un fourreau 601, une tige 602 montée coulissante dans le fourreau 601, et un ressort (non visible) permettant de rappeler la tige 602 en position escamotée dans le fourreau 601. Le fourreau 601 est articulé par son extrémité libre sur la structure porteuse (et plus précisément sur un élément s'étendant en saillie au-dessus du rail mobile correspondant), autour d'un axe transversal. La tige 602 est également articulée par son extrémité libre sur une excroissance de la bielle arrière 402 correspondante (cette excroissance étant située non pas entre les deux axes d'articulation A1, A2, mais d'un côté extérieur de ces deux axes).

Comme le montrent les figures 1 et 2, l'armature de dossier 300 s'étend au-dessus et de part et d'autre de l'armature d'assise 200. Elle pourrait former un ensemble monobloc fixé sur la structure porteuse 100.

En pratique, elle comporte ici un cadre 301 avec deux flancs latéraux dont les extrémités sont reliés par des traverses haute et basse. Ce cadre 301 est situé au-dessus de l'armature d'assise 200.

L'armature de dossier 300 comporte en outre deux flancs de jonction 302 qui s'étendent de part et d'autre de l'armature d'assise 200. Ces deux flancs de jonction 302 sont fixés respectivement aux deux rails mobiles 112, et s'étendent dans le prolongement des deux flancs latéraux du cadre 301. Ils sont articulés sur ce dernier de façon à ce que le dossier puisse basculer vers l'avant et vers l'arrière.

On notera ici que puisque l'ajustement de la hauteur de l'assise par rapport au plancher permet d'ajuster la hauteur de l'assise par rapport au dossier sur une course supérieure à 50 mm (ici d'environ 60 mm), on peut prévoir que le dossier ait une fonction d'appui-tête (la traverse haute du cadre 301 formant l'armature de l'appui-tête). En effet, aucun réglage de hauteur de l'appui-tête par rapport au dossier ne sera plus nécessaire.

On notera également que le coin situé à la jonction entre la traverse haute et l'un des flancs latéraux du cadre 301 forme une encoche servant de passage pour la ceinture de sécurité. Ici, puisque l'armature de dossier 300 est directement fixée aux rails mobiles 112, les contraintes qu'exercent la ceinture de sécurité sur le dossier lors d'un accident de la route ne se transmettent pas à l'assise, qui n'a donc pas à être renforcée en conséquence.

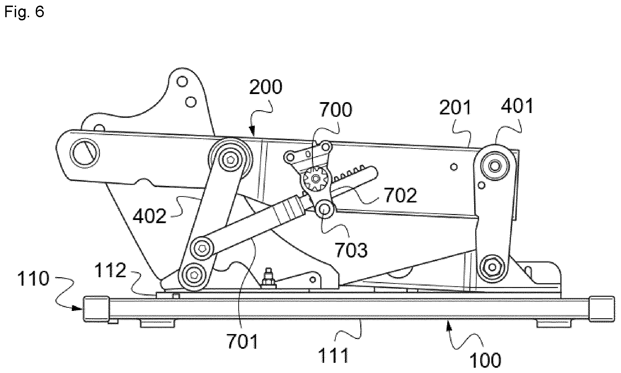

Sur les figures 5 et 6, on a représenté un second mode de réalisation de l'invention, qui diffère principalement du précédent par le mécanisme permettant de faire monter ou descendre l'assise 200.

Dans ce mode, l'armature d'assise 200 présente ici encore une forme de cadre avec deux flancs latéraux 201, et elle est montée sur la structure porteuse 100 par deux bielles arrière 402 identiques et deux bielles avant 401 identiques.

Dans ce mode, le mécanisme de montée/descente de l'assise agit sur l'une des bielles arrière 402 qui est donc qualifiée de menante.

Les moyens de manoeuvre permettant de commander la levée ou l'abaissement de l'assise sont de préférence manuels, mais ils pourraient en variante être motorisés. Ils comportent ici un levier de pompage accessible depuis l'avant de l'assise et qui permet d'actionner ce mécanisme.

Ces mécanisme de montée/descente comporte ici un système de pignon-crémaillère.

Le pignon 700 est ici monté pivotant sur l'un des deux flancs latéraux 201 de l'assise 200. Il est en pratique monté rotatif sur un axe qui est fixé, d'un côté, au flanc latéral 201, et, de l'autre, à une pièce métallique 702 qui est vissée sur ce même flan (sur les figures 5 et 6, une partie de cette pièce métallique est représentée en transparence pour laisser apparaître le pignon 700).

La crémaillère 701 est quant à elle engagée entre ce pignon 700 qu'elle engrène et un rouleau 703 qui est monté rotatif sur un axe fixé, d'un côté, au flanc latéral 201, et, de l'autre, à la pièce métallique 702 précitée. Ce rouleau 703 permet de maintenir la crémaillère 701 engrenée sur le pignon 700.

Cette crémaillère 701 s'étend en longueur selon un axe longitudinal, depuis une extrémité qui est crantée et qui engrène le pignon 700, jusqu'à une extrémité qui est articulée sur la bielle arrière 402, autour d'un axe parallèle aux axes de pivot des bielles.

Ainsi, comme le montrent les figures 5 et 6, l'actionnement du levier permet de faire pivoter le pignon 700 et donc de tirer la crémaillère 701 vers l'avant ou de la repousser vers l'arrière, afin de faire monter ou descendre l'assise 200.

On comprendra ici que le levier pourra être aisément remplacé par un moteur afin d'automatiser cette montée/descente de l'assise.

La présente invention n'est nullement limitée aux modes de réalisation décrits et représentés, mais l'homme du métier saura y apporter toute variante conforme à l'invention. Typiquement, si ici, le système de bielles comporte quatre bielles, il pourrait en comporter un nombre différent (deux, trois, six...).

Par ailleurs, on pourrait prévoir que les deux bielles arrière soient connectées ensemble par une traverse, laquelle serait alors placée le plus haut possible pour ne pas gêner les pieds du passager arrière.

On pourrait par ailleurs prévoir de motoriser le mouvement de l'assise par rapport à la structure porteuse, auquel cas le moteur sera de préférence logé dans la moitié avant de l'assise.

## Revendications

1. Siège (10) pour véhicule automobile, comportant :
- une structure porteuse (100) équipée de moyens de fixation (111A) à un plancher du véhicule automobile,
- une armature d'assise (200) montée de façon mobile sur la structure porteuse (100) par un système de bielles, sur une course donnée, et
- une armature de dossier (300) directement montée de façon mobile sur la structure porteuse (100),
**caractérisé en ce que** le système de bielles est agencé de telle manière que lorsque l'armature d'assise (200) avance par rapport à la structure porteuse (100), sur au moins une majeure partie de sa course, elle s'abaisse vers la structure porteuse (100).

2. Siège (10) selon la revendication 1, dans lequel le système de bielles comporte quatre bielles (401, 402), réparties par paires de chaque côté de l'armature d'assise (200), dont deux bielles avant (401) et deux bielles arrière (402), chaque bielle avant (401) et arrière (402) étant articulée, d'un côté, sur l'armature d'assise (200), et, de l'autre, sur la structure porteuse (100).

3. Siège (10) selon la revendication 2, dans lequel seules les bielles avant (401) du système de bielles sont fixées l'une à l'autre par au moins une traverse (403).

4. Siège (10) selon la revendication 2 ou 3, dans lequel, chacune des bielles avant (401) et arrière (402) étant articulée sur l'armature d'assise (200) et sur la structure porteuse (100) autour de deux axes d'articulation (A1, A2, A3, A4) distincts :
- la distance entre les deux axes d'articulation (A3, A4) de chaque bielle avant (401) est différente de la distance entre les deux axes d'articulation (A1, A2) de chaque bielle arrière (402), et/ou
- le plan passant par les deux axes d'articulation (A3, A4) de chaque bielle avant (401) est incliné par rapport au plan passant par les deux axes d'articulation (A1, A2) de chaque bielle arrière (402).

5. Siège (10) selon l'une des revendications 1 à 4, dans lequel il est prévu des moyens de manoeuvre (500), permettant à un occupant du siège (10) de déplacer l'armature d'assise (200) par rapport à la structure porteuse (100), lesdits moyens de manoeuvre (500) étant localisés dans une moitié avant de l'assise (200).

6. Siège (10) selon les revendications 2 et 5, dans lequel les moyens de manoeuvre (500) sont adaptés à actionner l'une des bielles avant (401).

7. Siège (10) selon la revendication 6, dans lequel les moyens de manoeuvre (500) sont couplés à une roue dentée (501) engrenant des crans (405) répartis en arc de cercle sur ladite bielle avant (401).

8. Siège (10) selon l'une des revendications 1 à 7, dans lequel il est prévu des moyens de compensation du poids (600) adaptés à faciliter la remontée de l'armature d'assise (200) par rapport à la structure porteuse (100).

9. Siège (10) selon la revendication 8, dans lequel les moyens de compensation du poids (600) comportent au moins un ressort dont une extrémité est couplée à la structure porteuse (100) et dont une autre extrémité est couplée au système de bielles.

10. Siège (10) selon les revendications 2 et 9, dans lequel ladite autre extrémité est couplée à l'une des bielles arrière (402).

11. Siège (10) selon l'une des revendications 1 à 10, dans lequel la structure porteuse (100) comporte deux glissières (110) qui comprennent chacune un rail fixe (111) équipé des moyens de fixation (111A) au plancher du véhicule automobile, et un rail mobile (112) qui est monté coulissant dans le rail fixe (111) et auquel est couplé le système de bielles.

12. Véhicule automobile comportant un plancher, **caractérisé en ce qu'**il comporte au moins un siège (10) conforme à l'une des revendications 1 à 11, dont la structure porteuse (100) est fixée au plancher.
